# EUROPEAN PATENT SPECIFICATION

(11) **EP 1 619 863 B1**
(45) Date of publication and mention of the grant of the patent: **10.03.2010**
(21) Application number: 05015458.2
(22) Date of filing: 15.07.2005
(51) Int. Cl.: H04M 1/725

(54) **Apparatus and method for managing push-to-talk in a mobile phone.**
Erzeugnis und Verfahren zur Steuerung einer von "Push-to-talk" in einem Mobiletelephon
Appareil et procédé de contrôle de la function "Push-to-talk" dans un téléphone mobile

(30) Priority: 23.07.2004 KR 2004057716
(43) Date of publication of application: 25.01.2006
(73) Proprietor: LG Electronics, Inc., Seoul (KR)
(72) Inventor: Lim, Guk-Chan, Uiwang Gyeonggi-Do (KR)
(74) Representative: Katérle, Axel

(56) References cited:
- EP-A- 1 241 861
- WO-A-01/37526
- WO-A1-94/26054
- GB-A- 2 322 044
- US-A- 5 371 901
- US-A- 5 649 307
- US-A1- 2004 054 539
- US-B1- 6 522 894

## Description

### BACKGROUND OF THE INVENTION

### 1. Field of the Invention

The present invention relates to a mobile communications terminal, and particularly, to an apparatus and method for managing talk burst authority using voice (or audio) detection and recognition in a mobile communications terminal for a Push-To-Talk (PTT) service.

### 2. Background of the Related Art

A Push-To-Talk (PTT) service is a service using a half-duplex mode in which only one user can be allowed to speak (i.e., receive talk burst authority). The PTT service provides one-to-one or one-to-group conversations according to a user selection.

The one-to-group conversation can embody the PTT service for a plurality of conversation parties. When a certain user presses a PTT key by selecting a plurality of users or groups, a session is established between PTT terminals through a PTT server, and all of the selected recipients take part in the session, thereby transmitting and receiving voice (or audio) data.

A mobile communications terminal (hereinafter, referred to as a PTT terminal) for all the PTT services having the established session can provide PTT communications. However, the PTT terminal must receive talk burst authority to transmit the voice (or audio) data, and the PTT server manages the talk burst authority so as to allow only one of users having taken part in the session to transmit the voice (or audio) data.

In the related art, the user must perform a series of operations for pressing or releasing a PTT key established in the PTT terminal to thusly request talk burst authority or release his talk burst authority allocated thereto. As a result, when the user is in a condition that he can not use his hands or must perform such operations several times, the user could not conveniently use such function.

Those problems can be solved by performing the process for requesting and releasing the talk burst authority using voice (or audio) recognition instead of handling the PTT key. That is, when the user inputs into the PTT terminal a word which is previously designated to use in the cases of requesting and releasing permission to speak, the PTT terminal recognizes the inputted voice (or audio) and confirms whether the corresponding voice (or audio) is a voice for requesting talk burst authority or releasing it. According to the result of the confirmation, the PTT terminal transmits a talk burst request message or a talk burst release message to the PTT server.

However, in case that the talk burst authority is managed using the voice recognition, the PTT terminal requires great resources including power in order to recognize the voice inputted by the user. That is, the PTT terminal which uses limited resources wastes power to continuously monitor whether the voice is inputted through a microphone or not. Furthermore, the PTT terminal requires various software or hardware processors for voice recognition to precisely recognize the voice inputted through the microphone. As a result, great resources are inefficiently consumed.

United States Patent No. 5,371,901 discloses a portable communication device controlled by a voice recognition circuitry remote from the portable communication device.

UK Patent Application GB 2,322,044 A discloses a voice-controlled portable telephone.

United States Patent Application Publication No. US 2004/0054539 A1 discloses a method and system for controlling software applications using voice commands.

International patent application WO 94/26054 relates to an apparatus and method for transparent telephony that utilizes speech-based signalling for initiating and handling calls.

### SUMMARY OF THE INVENTION

Therefore, an object of the present invention is to provide an apparatus and method for managing talk burst authority of a mobile communications terminal for a Push-To-Talk (PTT) service capable of minimizing resources which a PTT terminal uses to recognize a voice (or audio) inputted by a user.

To achieve the object there is provided a Push-To-Talk (PTT) mobile communications terminal according to claim 1.

To achieve the object, there is provided a method for managing talk burst authority of a PTT mobile communications terminal according to claim 5.

Improvements to the PTT terminal and the method are recited in the dependent claims.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a block diagram showing an inner construction of a PTT terminal according to the present invention; and
Figs. 2A and 2B are flow charts showing sequential steps of a method for managing talk burst authority according to the present invention.

### DETAILED DESCRIPTION OF THE INVENTION

Reference will now be made in detail to the preferred embodiments of an apparatus and method for managing talk burst authority of a mobile communications terminal for a PTT service according to the present invention, examples of which are illustrated in the accompanying drawings.
The present invention may further include a voice activity detector for generating a trigger signal in a PTT terminal when a user inputs a voice (or audio) through a microphone. In other words, when the user inputs a specific voice, the voice activity detector generates the trigger signal, and a main processing unit of the PTT terminal performs a series of operations for recognizing the inputted voice from a time point of detecting the trigger signal.

In a method for implementing processes for requesting and releasing talk burst authority using a user voice (or audio), the present invention provides explanations for time points that a voice recognition processor for recognizing the user voice starts or terminates its operation, and a process for transmitting a talk burst request message or a talk burst release message from the PTT terminal to a PTT server according to the voice recognition result.

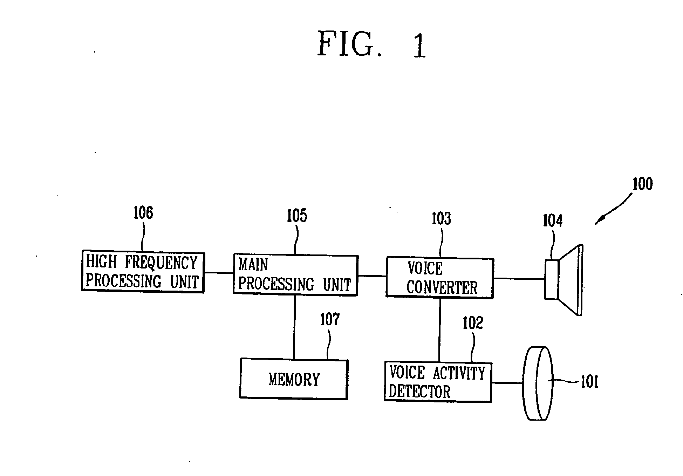

Fig. 1 is a block diagram showing a construction of the PTT terminal according to the present invention. The PTT terminal includes: a voice activity detector 102 for generating a trigger signal when a voice (or audio) is inputted through a microphone 101 of the PTT terminal; a voice converter 103 for coding the voice (or audio) inputted through the microphone 101 or decoding the received voice, to thereafter output the voice through a speaker 104; a high frequency processing unit 106 for transmitting and receiving high frequency audio signals; a main processing unit 105 for handling conversations and voice recognition via the high frequency processing unit 106; and a memory 107 for storing various programs and data for driving the main processing unit 105.

The PTT terminal further includes a buffer (not shown) for temporarily storing the user voice inputted through the microphone 101 for recognition thereof. At this time, the buffer may be included in the main processing unit 105 or separately exist, and operate using a First In First Out (FIFO) method in which a previously inputted voice is outputted earlier.

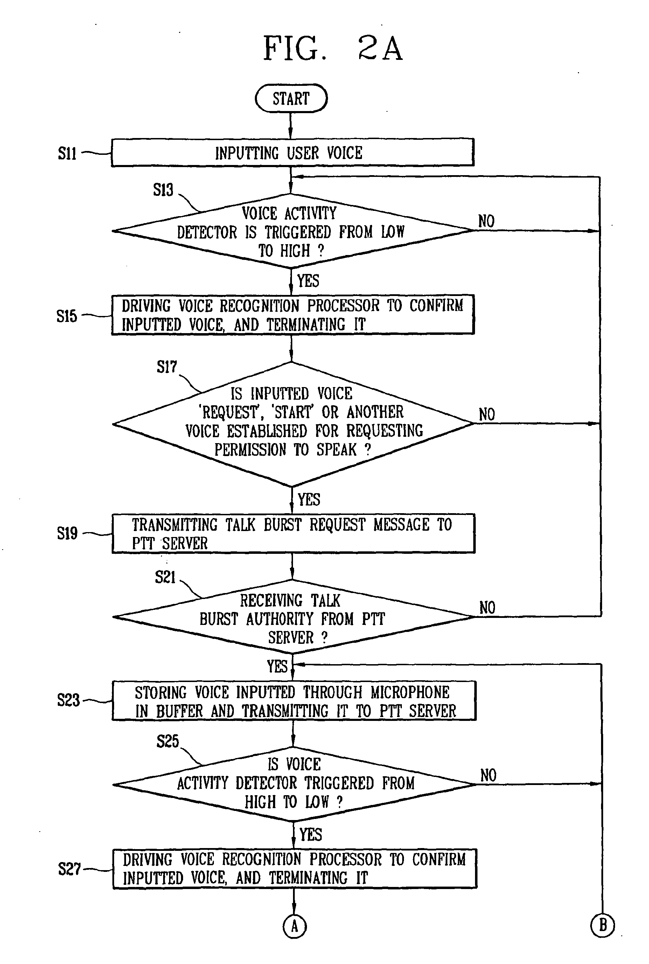

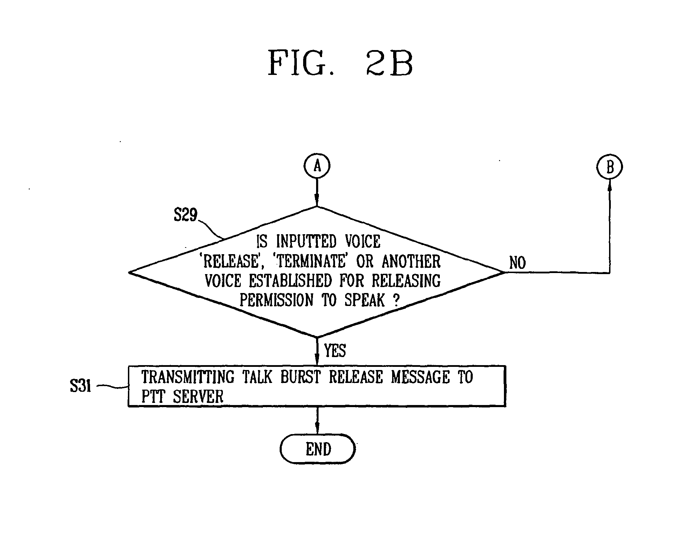

Figs. 2A and 2B are the flow charts showing sequential steps of a method for managing a talk burst authority according to the present invention, in which the PTT terminal recognizes the user voice and thus requests or releases the talk burst authority.

First, in order to request or release talk burst authority using the voice recognition, a particular word or sentence used for requesting the talk burst authority or a particular word or sentence used for releasing the talk burst authority must be previously established in the PTT terminal. For instance, the user establishes the word or sentence for requesting permission to speak as 'request' or 'start', and word or sentence for releasing permission to speak as 'release' or 'terminate'.

Hereinafter, in the detailed explanations therefor, the word for requesting the talk burst authority is assumed as 'request' or 'start', and the word for releasing the talk burst authority is assumed as 'release' or 'terminate'.

As shown in Fig. 2, when a user inputs his voice (or audio) through the microphone 101 of the PTT terminal (S11), the voice activity detector 102 in the PTT terminal generates a trigger signal (S13). At this time, when the user inputs the voice into a PTT terminal of which voice recognition processor does not operate, the voice activity detector 102 is triggered from 'low' to 'high'.

When the voice activity detector 102 generates a signal which is triggered from 'low' to 'high', the main processing unit 105 drives the voice recognition processor, and confirms the user voice inputted through the microphone 101 by the voice recognition processor, thereafter terminating the corresponding voice recognition processor (S15). At this time, the voice recognition processor is driven for a specific time, namely, time that the user takes to speak (or pronounce) 'request' or 'start', and then terminated.

If the voice confirmed by the voice recognition processor corresponds to 'request' or 'start', or another voice which is previously established for requesting permission to speak (S17), the main processing unit 105 transmits a talk bust request message to a PTT server (not shown) (S19). Conversely, if the voice confirmed by the voice recognition processor does not correspond to 'request' or 'start', or another voice which is previously established for requesting permission to speak, the main processing unit 105 does not transmit the talk burst request message.

When the PTT terminal 100 is allowed to speak (i.e., receives talk burst authority) by the PTT server (S21), the user voice inputted through the microphone 101 is transmitted to the PTT server through the main processing unit and simultaneously stored in the buffer (S23). At this time, the buffer is driven by a FIFO method in which when a voice is inputted, a previously inputted voice is outputted, and thus the latest inputted voice is stored at any time. The buffer has such size corresponding to that the voice established by the user to request a talk burst authority release like 'release' or 'terminate' can be stored therein.

That is, after the PTT terminal is allowed to speak (i.e, receives talk burst authority), if the user voice is inputted through the microphone 101, the voice activity detector 102 generates a signal which is triggered from 'low' to 'high', and the main processing unit 105 drives the voice recognition processor to thusly confirm the inputted voice. If the inputted voice is not the voice established as 'request', 'start' 'release' or 'terminate', the voice recognition processor is driven for a particular time, but the talk burst request message or talk burst release message is not transmitted to the PTT server. At the same time, the main processing unit 105 of the PTT terminal transmits the user voice to the PTT server and stores the user voice in the buffer.

If the user who is allowed to speak does not input any voice for a particular time, the voice activity detector 102 generates a signal which is triggered from 'high' to 'low' (S25). The main processing unit 105 drives the voice recognition processor and thus confirms the latest voice stored in the buffer, thereafter terminating the corresponding voice recognition processor (S27).

That is, after the user inputs 'release' or 'terminate' to release the talk burst authority, or another voice which the user establishes for releasing the talk burst authority, if the user does not input any voice for a particular time, the voice activity detector 102 is triggered from 'high' to 'low'. The main processing unit 105 senses the generation of the trigger signal and drives the voice recognition processor so as to confirm the latest voice stored in the buffer, thereafter terminating the voice recognition detector. At this time, the voice recognition processor is driven for a particular time that the user takes to speak (or pronounce) 'release', 'terminate' or another voice which the user establishes for releasing the talk burst authority, and then terminated.

If the voice confirmed by the voice recognition processor is 'release', 'terminate' or another voice which the user establishes for releasing the talk burst authority (S29), the main processing unit 105 transmits the talk burst release message to the PTT server (S31). Conversely, if the voice confirmed by the voice recognition processor is not 'release', 'terminate' or another voice which the user establishes for releasing the talk burst authority, the main processing unit 105 senses this case as the user stops a voice input for a moment, and thus does not transmit the talk burst release message. The main processing unit 105 continuously performs such processes for maintaining the state that the talk burst is received (i.e., the user is allowed to speak), transmitting the voice inputted by the user to the PTT server, and storing the inputted voice in the buffer.

Features of the present invention will now be described. First, in the process for requesting permission to speak, if the voice activity detector is triggered from 'low' to 'high', the voice recognition processor is driven. The voice inputted through the microphone is recognized as a voice established by the user for requesting permission to speak, the main processing unit of the PTT terminal transmits the talk burst request message to the PTT server.

Second, in the process for transmitting the user voice to the PTT server by the PTT terminal which has received permission to speak, the user voice inputted through the microphone is transmitted to the PTT server and simultaneously stored in the buffer of the PTT terminal. At this time, the buffer has such size corresponding to that the voice established for releasing the permission to speak can be stored, so that the voice recognition processor can confirm the voice established by the user for releasing the talk burst authority. The buffer also stores the latest inputted voice.

Third, in the process for releasing permission to speak, if the user inputs a voice (or audio) established for releasing the talk burst authority and does not input any other voice for a particular time, the voice activity detector is triggered from 'high' to 'low' and the voice recognition processor is driven. The voice recognition processor confirms the latest voice stored in the buffer. When the voice stored in the buffer corresponds to the voice established for releasing the talk burst authority, the main processing unit of the PTT terminal transmits the talk burst release message to the PTT server.

In the present invention, the voice recognition processor initiates its operation at a time point that the voice activity detector is triggered from 'low' to 'high' or from 'high' to 'low', and is driven for a particular time from the time point of initiating its operation, namely, for time taken by recognizing the voice established for requesting or releasing the talk burst, thereafter being terminated.

As aforementioned, in the PTT terminal according to the present invention, in case of requesting or releasing permission to speak using voice (or audio) recognition, consumption of power and unnecessary hardware resources caused by a processor which continuously recognize a user voice, can be effectively minimized by defining time points for starting and terminating the operation of a voice recognition processor.

## Claims

1. A Push-To-Talk (PTT) mobile communications terminal (100), comprising:
a voice activity detector (102) for generating a trigger signal when voice (or audio) is input through a microphone (101);
a voice recognition processor for recognizing the input voice to determine if it corresponds to a voice command for requesting or releasing a talk burst authority;
**characterized in** further comprising:
a buffer (107) for temporarily storing the voice inputted through the microphone (101); and
a main processing unit (105) for detecting the trigger signal, controlling the voice recognition operation of the voice recognition processor by starting the operation when the trigger signal is detected and then terminating the operation after a particular time period taken by recognizing the voice command for requesting or releasing said talk burst authority; and controlling management of the talk burst authority by transmitting to a PTT server a talk burst request message or a talk burst release message according to a result of the voice recognition operation.

2. The terminal (100) of claim 1, wherein the voice activity detector (102) is adapted to generate a signal triggered from 'low' to 'high' or from 'high' to 'low'.

3. The terminal (100) of any of the preceding claims, wherein the main processing unit (105) is adapted to transmit the talk burst request message to the PTT server when the input voice is recognized as a voice command for requesting the talk burst authority, and to transmit a talk burst release message to the PTT server when the input voice is recognized as a voice command for releasing the talk burst authority.

4. The terminal (100) of any of the preceding claims, further comprising a buffer for temporarily storing the input voice wherein the buffer is adapted to be driven by a First In First Out (FIFO) method.

5. A method for managing talk burst authority for a Push-To-Talk (PTT) mobile communications terminal (100), said terminal comprising a voice activity detector (102), a voice recognition processor, and a main processing unit (105); said method comprising:
generating, by the voice activity detector (102), a trigger signal when voice (or audio) is input through a microphone (101);
performing, by the voice recognition processor, a voice recognition operation on the input voice to determine whether it corresponds to a voice command for requesting or releasing the talk burst authority,
**characterized in** further comprising:
storing the input voice in a buffer;
detecting, by the main processing unit (105), the trigger signal generated by the voice activity detector (102); controlling the voice recognition processor by the main processing unit (105),
by starting the voice recognition operation when the trigger signal is detected and
then terminating it after a particular time period taken by recognizing the voice command for requesting or releasing said talk burst authority; and
transmitting, by the main processing unit (105), to a PTT server a talk burst request message or a talk burst release message according to a result of the voice recognition operation.

6. The method of claim 5, wherein the step of transmitting the message with respect to the talk burst authority comprises:
when the input voice is recognized as a voice command for requesting the talk burst authority, transmitting the talk burst request message to the PTT server by the main processing unit (105); and
when the input voice is recognized as a voice command for releasing the talk burst authority, transmitting the talk burst release message to the PTT server by the main processing unit (105).

7. The method of any of claims 5 or 6, wherein the trigger signal is triggered from 'low' to 'high or from 'high' to 'low'.

8. The method of any of claims 5 to 7, wherein the particular time period duping which the voice recognition processor performs voice recognition corresponds to time taken by speaking (or pronouncing) the voice command for requesting the talk burst authority or the voice command for releasing the talk burst authority.

9. The method of any of claims 5 to 8, wherein the voice command for requesting the talk burst authority is one of 'request', 'start' or another voice that a user establishes.

10. The method of any of claims 5 to 9, wherein the voice command for releasing the talk burst authority is one of 'release', 'terminate' or another voice that a user establishes.

11. The method of any of claims 5 to 10, further comprising:
when the talk burst authority is received, transmitting, by the main processing unit (101), the input voice to the PTT server and simultaneously storing the input voice in a buffer.

12. The method of any of claims 5 to 11, wherein the buffer is driven by a First In First Out (FIFO) method.

13. The method of any of claims 5 to 12, further comprising:
when the talk burst authority is received, the generated trigger signal is triggered from 'high' to 'low' when the input voice is stopped for a particular time.

14. The method of any of claims 5 to 13, wherein the buffer has a size large enough for storing the voice command for releasing the talk burst authority.

## Patentansprüche

1. Mobiles Push-To-Talk (PTT)-Kommunikationsendgerät (100), umfassend:
einen Stimmen-Aktivitätssensor (102) zum Erzeugen eines Auslösesignals, wenn eine Stimme (oder ein Audiosignal) über ein Mikrofon (101) eingegeben wird;
einen Stimmenerkennungsprozessor zum Erkennen der Stimmeingabe, um zu erfassen, ob diese einem Stimmenbefehl zum Anfordern oder Freigeben einer Sprech-Signalfolgen(burst)-Autorisierung entspricht,
**dadurch gekennzeichnet, dass** es ferner umfasst:
einen Puffer (107) zum temporären Speichern der über das Mikrofon (101) eingegebenen Stimmeingabe; und
eine Hauptverarbeitungseinheit (105) zum Erfassen des Auslösesignals zum Steuern des Stimmeingabeerkennungsbetriebs des Stimmeingabe-Erkennungsprozessors durch Starten des Betriebs, wenn das Auslösesignal erfasst wird, und anschließendes Beenden des Betriebs nach einer bestimmten Zeitperiode, die durch das Erkennen des Stimmeingabebefehls zum Anfordern oder Freigeben der Sprech-Signalfolgen-Autorisierung festgelegt wurde; und zum Steuern der Handhabung der Sprech-Signalfolgen-Autorisierung durch Übertragen einer Sprech-Signalfolgen-Anforderungsnachricht oder einer Sprech-Signalfolgen-Freigabenachricht zu einem PTT-Server gemäß einem Ergebnis des Stimmeingabe-Erkennungsbetriebs.

2. Endgerät (100) nach Anspruch 1, wobei der Stimmeingabe-Aktivitätssensor (102) dazu ausgebildet ist, ein Signal zu erzeugen, das von "low" zu "high" oder von "high" zu "low" umschaltet.

3. Endgerät (100) nach einem der vorangehenden Ansprüche, wobei die Hauptverarbeitungseinheit (105) dazu ausgelegt ist, die Sprech-Signalfolgen-Anforderungsnachricht zu dem PTT-Server zu übertragen, wenn die Stimmeingabe als Stimmeingabebefehl zum Anfordern der Sprech-Signalfolgen-Autorisierung erkannt wird, und um eine Sprech-Signalfolge-Freigabenachricht zu dem PTT-Server zu übertragen, wenn die Stimmeingabe als Stimmeingabebefehl zum Freigeben der Sprech-Signalfolgen-Autorisierung erkannt wird.

4. Endgerät (100) nach einem der vorangehenden Ansprüche, ferner umfassend einen Puffer zum temporären Speichern der Stimmeingabe, wobei der Puffer dazu ausgelegt ist, nach Maßgabe eines First In-First Out(FIFO)-Verfahrens betrieben zu werden.

5. Verfahren zum Handhaben einer Sprech-Signalfolgen-Autorisierung für ein mobiles Push-To-Talk (PTT-)-Kommunikationsendgerät (100), wobei das Endgerät einen Stimmen-Aktivitätssensor (102), einen Stimmenerkennungsprozessor und eine Hauptverarbeitungseinheit (105) umfasst, wobei das Verfahren umfasst:
Erzeugen eines Auslösesignals durch den Stimmen-Aktivitätssensor (102), wenn über ein Mikrofon (101) eine Stimmeingabe (oder ein Audiosignal) eingegeben wird;
Durchführen mittels des Stimmen-Erkennungsprozessors eines Stimmeingabe-Erkennungsbetriebs an der Stimmeingabe, um zu bestimmen, ob diese einem Stimmeingabebefehl zum Anfordern oder Freigeben einer Sprech-Signalfolgen-Autorisierung entspricht,
**dadurch gekennzeichnet, dass** es ferner umfasst:
Speichern der Stimmeingabe in einem Puffer;
Erfassen des Auslösesignals mittels der Hauptverarbeitungseinheit (105), das durch den Stimmen-Aktivitätssensor (102) erzeugt wurde;
Steuern des Stimmeingabe-Erkennungsprozessors durch die Hauptverarbeitungseinheit (105), indem der Stimmeingabe-Erkennungsbetrieb gestartet wird, wenn das Auslösesignal erfasst wird, und anschließendes Beenden desselben nach einer bestimmten Zeitperiode, die durch Erkennen des Stimmeingabebefehls zum Anfragen oder Freigeben der Sprech-Signalfolgen-Autorisierung vorgegeben wird; und
Übertragen einer Sprech-Signalfolgen-Anforderungsnachricht oder einer Sprech-Signalfolgen-Freigabenachricht durch die Hauptverarbeitungseinheit (105) an einen PTT-Server nach Maßgabe eines Ergebnisses des Stimmeingabe-Erkennungsbetriebs.

6. Verfahren nach Anspruch 5, wobei der Schritt des Übertragens der Nachricht bezüglich der Sprech-Signalfolgen-Autorisierung umfasst:
dann, wenn die Stimmeingabe als Stimmeingabebefehl zum Anfordern der Sprechsignalfolgenautorisierung erkannt wird, Übertragen des Sprech-Signalfolgen-Anforderungsbefehls zu dem PTT-Server über die Hauptverarbeitungseinheit (105); und
dann, wenn die Stimmeingabe als Stimmeingabebefehl zum Freigeben der Sprech-Signalfolgen-Autorisierung erkannt wird, Übertragen der Stimmeingaben-Signalfolgen-Freigabenachricht zu dem PTT-Server über die Hauptverarbeitungseinheit (105).

7. Verfahren nach einem der Ansprüche 5 oder 6, wobei das Auslösesignal von "low" zu "high" oder von "high" zu "low" ausgeben wird.

8. Verfahren nach einem der Ansprüche 1 bis 7, wobei die bestimmte Zeitperiode, während welcher der Stimmen-Erkennungsprozessor die Stimmeingabenerkennung durchführt, derjenigen Zeit entspricht, die durch Sprechen (oder Betonen) des Stimmeingabebefehls zum Anfordern der Sprech-Signalfolgen-Autorisierung oder des Stimmeingabebefehls zum Freigeben der Sprech-Signalfolgen-Autorisierung entspricht.

9. Verfahren nach einem der Ansprüche 5 bis 8, wobei der Stimmeingabebefehl zum Anfordern der Sprech-Signalfolgen-Autorisierung den Befehl "Anfordern`` (request), "Start" oder einer anderen Stimmeingabe entspricht, die ein Nutzer vorgibt.

10. Verfahren nach einem der Ansprüche 5 bis 9, wobei der Befehl zum Freigeben der Sprech-Signalfolgen-Autorisierung einen der Befehle "Freigeben" (release), "Beenden" (terminate) oder einer anderen Stimmeingabe entspricht, die ein Nutzer vorgibt.

11. Verfahren nach einem der Ansprüche 5 bis 10, ferner umfassend:
dann, wenn die Sprech-Signalfolgen-Autorisierung empfangen wird, Übertragen über die Hauptverarbeitungseinheit (101) der Stimmeingabe an den PTT-Server und gleichzeitiges Speichern der Stimmeingabe in einem Speicher.

12. Verfahren nach einem der Ansprüche 5 bis 11, wobei der Puffer gemäß einem First In-First Out (FIFO)-Verfahren betrieben wird.

13. Verfahren nach einem der Ansprüche 5 bis 12, ferner umfassend:
dann, wenn die Sprech-Signalfolgen-Autorisierung empfangen wird, Setzen des erzeugten Auslösesignals von "high" zu "low", wenn die Stimmeingabe über eine bestimmte Zeit unterbrochen wird.

14. Verfahren nach einem der Ansprüche 5 bis 13, wobei der Puffer eine Größe aufweist, die groß genug ist, um den Stimmeingabenbefehl zum Freigeben der Sprech-Signalfolgen-Autorisierung zu speichern.

## Revendications

1. Terminal de communication mobile (100) avec fonction « Push-to-Talk » (PTT) comprenant : un détecteur d'activité vocale (102) destiné à générer un signal de déclenchement lorsqu'une voix (ou un son) est délivrée en entrée par l'intermédiaire d'un microphone (101) ;
un processeur de reconnaissance vocale destiné à reconnaître la voix d'entrée pour déterminer si elle correspond à une commande vocale destinée à demander ou libérer une autorisation de salves de dialogues ;
**caractérisé en ce qu'**il comprend en outre :
une mémoire tampon (107) destinée à mémoriser temporairement la voix délivrée en entrée par l'intermédiaire du microphone (101) ; et
une unité centrale principale (105) destinée à détecter le signal de déclenchement, commandant l'opération de reconnaissance vocale du processeur de reconnaissance vocale en lançant l'opération lorsque le signal de déclenchement est détecté et en terminant ensuite l'opération après une période de temps particulière prise par la reconnaissance de la commande vocale pour demander ou libérer une autorisation de salves de dialogues ; et commandant la gestion de l'autorisation de salves de dialogues en transmettant à un serveur de messagerie vocale instantanée PTT un message de demande de salves de dialogues ou un message de libération de salves de dialogues conformément à un résultat de l'opération de reconnaissance vocale.

2. Terminal (100) selon la revendication 1, dans lequel le détecteur d'activité vocale (102) est adapté pour générer un signal déclenché de « bas » à « haut » ou de «haut» à «bas».

3. Terminal (100) selon l'une quelconque des revendications précédentes, dans lequel l'unité centrale principale (105) est adaptée pour transmettre le message de demande de salves de dialogues vers le serveur de messagerie vocale instantanée PTT lorsque la voix d'entrée est reconnue comme commande vocale destinée à demander l'autorisation de salves de dialogues, et pour transmettre un message de libération de salves de dialogues vers le serveur de messagerie vocale instantanée PTT lorsque la voix d'entrée est reconnue comme commande vocale destinée à libérer l'autorisation de salves de dialogues.

4. Terminal (100) selon l'une quelconque des revendications précédentes, comprenant en outre une mémoire tampon destinée à mémoriser temporairement la voix d'entrée dans lequel la mémoire tampon est adaptée pour être entraînée par un procédé premier entré, premier sorti (en anglais : FIFO).

5. Procédé de gestion d'une autorisation de salves de dialogues pour un terminal de communication mobile (100) avec fonction « Push-to-Talk » (PTT), ledit terminal comprenant un détecteur d'activité vocale (102), un processeur de reconnaissance vocale et une unité centrale principale (105) ; ledit procédé comprenant :
la génération, par le détecteur d'activité vocale (102), d'un signal de déclenchement lorsqu'une voix (ou un son) est délivrée en entrée par l'intermédiaire d'un microphone (101) ;
l'exécution, par le processeur de reconnaissance vocale, d'une opération de reconnaissance vocale sur la voix d'entrée pour déterminer si elle correspond à une commande vocale destinée à demander ou libérer l'autorisation de salves de dialogues,
**caractérisé en ce qu'**il comprend en outre :
la mémorisation de la voix d'entrée dans une mémoire tampon ;
la détection, par l'unité centrale principale (105), du signal de déclenchement généré par le détecteur d'activité vocale (102) ; la commande du processeur de reconnaissance vocale par l'unité centrale principale (105),
en lançant l'opération de reconnaissance vocale lorsque le signal de déclenchement est détecté et en la terminant ensuite après une période de temps particulière prise par la reconnaissance de la commande vocale destinée à demander ou libérer ladite autorisation de salves de dialogues ; et
la transmission, par l'unité centrale principale (105), vers un serveur de messagerie vocale instantanée PTT d'un message de demande de salves de dialogues ou d'un message de libération de salves de dialogues conformément à un résultat de l'opération de reconnaissance vocale.

6. Procédé selon la revendication 5, dans lequel l'étape consistant à transmettre le message par rapport à l'autorisation de salves de dialogues comprend :
lorsque la voix d'entrée est reconnue en tant que commande vocale destinée à demander l'autorisation de salves de dialogues, la transmission du message de demande de salves de dialogues vers le serveur de messagerie vocale instantanée PTT par l'unité centrale principale (105) ; et
lorsque la voix d'entrée est reconnue en tant que commande vocale destinée à libérer l'autorisation de salves de dialogues, la transmission du message de libération de salves de dialogues vers le serveur de messagerie vocale instantanée PTT par l'unité centrale principale (105).

7. Procédé selon l'une quelconque des revendications 5 ou 6, dans lequel le signal de déclenchement est déclenché de « bas » à « haut » ou de « haut » à «bas».

8. Procédé selon l'une quelconque des revendications 5 à 7, dans lequel la période de temps particulière pendant laquelle le processeur de reconnaissance vocale réalise la reconnaissance vocale correspond au temps pris par l'énoncé (ou la prononciation) de la commande vocale destinée à demander l'autorisation de salves de dialogues ou de la commande vocale destinée à libérer l'autorisation de salves de dialogues.

9. Procédé selon l'une quelconque des revendications 5 à 8, dans lequel la commande vocale destinée à demander l'autorisation de salves de dialogues est l'une parmi « demander », « commencer » ou une autre voix qu'un utilisateur établit.

10. Procédé selon l'une quelconque des revendications 5 à 9, dans lequel la commande vocale destinée à libérer l'autorisation de salves de dialogues est l'une parmi « libérer », « terminer » ou une autre voix qu'un utilisateur établit.

11. Procédé selon l'une quelconque des revendications 5 à 10, comprenant en outre :
lorsque l'autorisation de salves de dialogues est reçue, la transmission, par l'unité centrale principale (105), de la voix d'entrée vers le serveur de messagerie vocale instantanée PTT et simultanément la mémorisation de la voix d'entrée dans une mémoire tampon.

12. Procédé selon l'une quelconque des revendications 5 à 11, dans lequel la mémoire tampon est entraînée par un procédé premier entré, premier sorti (en anglais : FIFO).

13. Procédé selon l'une quelconque des revendications 5 à 12, comprenant en outre :
lorsque l'autorisation de salves de dialogues est reçue, le signal de déclenchement généré est déclenché de « haut » à « bas » lorsque la voix d'entrée est arrêtée pendant un temps particulier.

14. Procédé selon l'une quelconque des revendications 5 à 13, dans lequel la mémoire tampon présente une taille suffisamment importante pour mémoriser la commande vocale destinée à libérer l'autorisation de salves de dialogues.
